# EUROPÄISCHE PATENTSCHRIFT

(11) **EP 0 421 089 B1**
(45) Veröffentlichungstag und Bekanntmachung des Hinweises auf die Patenterteilung: **23.02.1994**
(21) Anmeldenummer: 90115436.9
(22) Anmeldetag: 11.08.1990
(51) Int. Cl.: B29C 45/14

(54) **Verfahren zum örtlich definierten, festhaftenden Anbringen von Kunststoff-Kleinteilen an im wesentlichen aus verklebten oder kunstharzgebundenen Naturfasern oder Spänen bestehenden Formpressteilen**
Method for local adherent applying of plastic parts on compression moulded pieces essentially from adhesive or resin bonded natural fibres or sharings
Procédé pour l'application adhérente localisée de parties en matière plastique à des pièces moulées par pressage essentiellement en fibres naturelles ou copeaux collés ou à liant à base de résine

(30) Priorität: 06.10.1989 DE 3933416
(43) Veröffentlichungstag der Anmeldung: 10.04.1991
(73) Patentinhaber: MERCEDES-BENZ AG, 70327 Stuttgart (DE)
(72) Erfinder: Schumacher, Rolf, D-7032 Sindelfingen (DE); Eissler, Ewald, D-7031 Hildrizhausen (DE)

(56) Entgegenhaltungen:
- FR-A- 2 378 627
- US-A- 2 890 481
- PATENT ABSTRACTS OF JAPAN, Band 5, Nr. 6 (M-50)[678], 16. Januar 1981;& JP-A-55 139 240 (PIONEER K.K.) 30-10-1980

## Beschreibung

Die Erfindung betrifft ein Verfahren zum örtlich definierten, festhaftenden Anbringen von Kunststoff-Kleinteilen an im wesentlichen aus verklebten oder kunstharzgebundenen Naturfasern oder Spänen bestehenden Formpreßteilen, wie es zur Produktion von Verkleidungselementen angewandt und hiermit als bekannt unterstellt wird.

Verkleidungsteile, die insbesondere auch eine Verstärkungs- und Trägerfunktion aufweisen, sind unter anderem aus gepreßtem Faserverbundwerkstoff, wie z.B. Preßspanplatten, als Formpreßteile hergestellt. Die Faserverbundwerkstoffe sind preisgünstig und weisen ein relativ geringes Gewicht auf, was vor allem im Automobilbau günstig ist. Nach dem Pressen werden an die Formpreßteile Kunststoff-Kleinteile z.B. in der Form von Befestigungselementen, angebracht. Diese Befestigungselemente sind, da sie gegenüber dem Formpreßteil eine bessere Formfähigkeit und eine höhere Stabilität aufweisen müssen, aus einem anderen Material gefertigt, wobei dieses Material teurer als der Faserverbundwerkstoff ist. Die Anbringung der Befestigungselemente erfolgt durch Verkleben, Vernieten, Verkrallen, Ultraschallschweißen oder auch durch Reibschweißen. Alle Verfahren weisen jedoch eine kostspielige Maschinentechnik auf. Zudem ist die Festigkeit beim Verkleben temperaturabhängig und durch den zusätzlich benötigten Klebstoff auch noch kostenintensiv. Eine weitere Möglichkeit zum Anbringen der Befestigungselemente erfolgt dadurch, daß die Befestigungselemente an Metallklammern eingerastet werden. Diese Metallklammern werden beim Pressen des Formpreßteiles in das Preßwerkzeug eingelegt, wodurch sich neben dem zusätzlichen Materialaufwand auch der hierfür notwendige Eingriff in den Preßzyklus nachteilig auswirkt.

Der Erfindung liegt die Aufgabe zugrunde, ein Verfahren zu entwickeln, mit dem Kunststoff-Kleinteile einfach und kostengünstig an das Formpreßteil angebracht werden können.

Die Aufgabe wird erfindungsgemäß mit den Verfahrensschritten des Ansprüches 1 gelöst. Bei einem erfindungsgemäßen Verfahren werden nach dem Pressen des Formpreßteiles in einem einzigen Arbeitsschritt die Kunststoff-Kleinteile mittels eines Spritzgußverfahrens angeformt und an dem Formpreßteil befestigt. Da der Kunststoff sowohl für die Befestigung als auch für die Kunststoffteile benützt wird, ergibt sich neben dem Zeit- und Kostenvorteil durch die Einsparung wenigstens eines Arbeitsschrittes auch ein Kostenvorteil, der auf der Einsparung der bisher benötigten Hilfmittel bzw. Hilfstoffe wie Schrauben, Klammern oder Klebstoff beruht. Unter Umständen können auch preisgünstigere Kunststoffe als bisher verwendet werden.

Weitere sinnvolle Verfahrensschritte sind den Unteransprüchen entnehmbar.

Mehrere Ausführungsbeispiele, mit denen dieses Verfahren durchgeführt werden kann, sind in den Zeichnungen dargestellt und werden im folgenden erläutert. Dabei zeigt:
- Figur 1: den Beginn des Preßvorganges eines Formpreßteiles mit einem durch einen Deckel verschlossenen Durchbruch,
- Figur 2: das Ende des Preßvorganges eines weiteren Formpreßteiles mit einem vollständigen Durchbruch,
- Figur 3: der Beginn des Spritzvorganges eines hinterschnittenen Durchbruches,
- Figur 4: das nach Figur 3 hergestellte, fertige und befestigte Kunststoff-Kleinteil,
- Figur 5: der Beginn des Spritzvorganges eines vollständigen Durchbruches und
- Figur 6: das nach Figur 5 hergestellte, fertige und befestigte Kunststoff-Kleinteil.

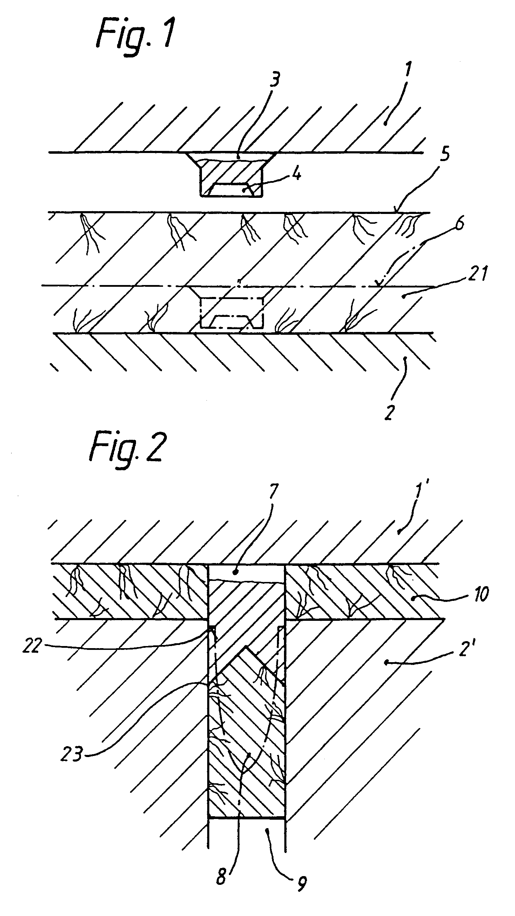

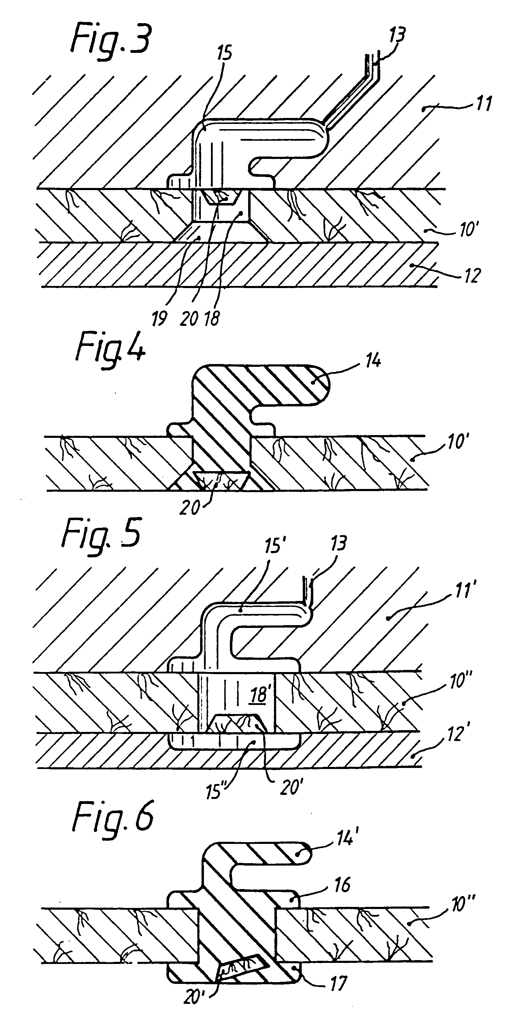

In Figur 1 ist der Beginn eines Preßvorganges für ein Formpreßteil 10′ schematisch abgebildet. Das Preßwerkzeug, bestehend aus Ober- 1 und Unterwerkzeug 2, ist geöffnet. Zwischen dem Oberwerkzeug 1 und dem Unterwerkzeug 2 ist der Faserverbundwerkstoff 21 - mit Klebstoff oder Kunstharz vermischte Naturfasern oder Späne - eingelegt. Die Schütthöhe 5 des lockeren Faserverbundwerkstoffes 21 beträgt mehr als das spätere Endmaß 6 des daraus gepreßten Formpreßteiles 10′. Am Oberwerkzeug 1 ist ein Formstempel 3 angeordnet, der an seiner Stirnseite, die dem Faserverbundwerkstoff 21 zugewandt ist, eine Ansenkung 4 aufweist. Der Formstempel 3 ist ausgehend vom Oberwerkzeug 1 zuerst konisch zusammengehend und anschließend zylindrisch ausgebildet. Das Oberwerkzeug 1 wird bei der Pressung des Formpreßteiles 10′ auf das Unterwerkzeug 2 unter Druck zubewegt. Hierbei senkt sich der Formstempel 3 in den zu pressenden Verbundwerkstoff 21 ein, wodurch ein Durchbruch 18 und auf der dem Unterverkzeug 2 zugewandten Seite ein diesen Durchbruch 18 verschließender Deckel 20 ausgebildet wird. Der Deckel 20 ist mit dem fertigen Formpreßteil durch eine einem geschlossenen Linienzug folgende kerbartige Dünnstelle verbunden. Diese Dünnstelle wird durch den die Ansenkung 4 umgebenden Rand der Stirnseite des Formstempels 3 gebildet, da die Erstreckung des Formstempels 3 quer zur Fläche des Formpreßteiles 10′ geringfügig kleiner ist als das Endmaß 6. Der konische Teil des Formstempels 3 bildet an der gegenüberliegenden Wandung des Formpreßteiles 10′ eine Hinterschneidung 19 des Durchbruches 18 aus. Ist das gepreßte Formpreßteil 10′ ausgehärtet, wird es, wie in Figur 3 dargestellt, in ein Spritzgußwerkzeug eingelegt.

Eine weitere Möglichkeit der Anbringung von Durchbrüchen beim Pressen eines anderen Formpressteiles 10 ist in Figur 2 dargestellt. Ein Unterschied dieses Formpreßteiles 10 gegenüber demjenigen des ersten Beispieles ist, daß hierbei der Durchbruch auf beiden Seiten offen ist. Im vorliegenden Fall ist dem Durchbruch auch keine Hinterschneidung 19 zugeordnet, jedoch ist es für den Fachmann ein leichtes, dies zu verwirklichen. Am Unterwerkzeug 2′ ist an der späteren Befestigungsstelle eines Kunststoff-Kleinteiles ein dem Durchmesser des Durchbruches angepaßte Bohrung 9 angeordnet. Während des Preßvorganges dringt in diese Bohrung 9 ein am Oberwerkzeug 1′ angeordneter Stanzstempel 7 oder ein Stoßdorn 8 (strichpunktiert gezeichnet) ein. Der Stanzstempel 7 bzw. der Stoßdorn 8 weisen entlang der Achse des Durchbruches eine Erstreckung auf, die das Endmaß dieses Formpreßteiles übertrifft. Dies dient dazu, daß während des Preßvorganges nur der überflüssige Faserverbundwerkstoff im Bereich des späteren Durchbruches über die Bohrung 9 entfernt wird. Dadurch ist die Dichte des Faserverbundwerkstoffes im Bereich der Ränder dieses Durchbruches nahezu gleich der sonstigen Dichte im Formpreßteil 10. Damit etwaige überstehende Naturfasern oder Späne an der Umrandung dieses Durchbruches keine sperrende Einflüsse beim Preßvorgang haben, weist der Stanzstempel 7 stirnseitig eine Schneide 23 und der Stoßdorn 8 eine Kante 22 auf, die diese Faserteile abscheren. Die Kante 22 des Stoßdornes 8 verbreitert den Stoßdorn 8 auf den der Bohrung 9 entsprechenden Durchmesser und ist in einem Abstand zum Oberwerkzeug 1′ angeordnet, der etwas größer ist als das Endmaß dieses Formpreßteiles 10. Der weitere Schritt des Verfahrens entspricht dem des Beispieles 1 und wird daher nicht mehr beschrieben. Diese Technik zum Einbringen von Durchbrüchen wird in der Praxis jedoch nur sehr selten angewendet, da es einige Probleme bereitet, die entstehenden Stanzabfälle aus dem heißen Werkzeug zu entfernen. Durchbrüche dieser Art werden bisher in der Praxis in einem separaten Arbeitsgang nach dem Herstellen des Formteiles eingebracht.

Das in Figur 1 dargestellte und im Beispiel 1 beschriebene fertige Formpreßteil 10′ wird, wie aus Figur 3 ersichtlich, lagedefiniert in ein aus oberer Werkzeughälfte 11 und unterer Werkzeughälfte 12 gebildetes Spritzgußwerkzeug eingelegt. Auf der Wandungsseite der Hinterschneidung 19 liegt das Formpreßteil 10′ bundig und dichtend auf der unteren Werkzeughälfte 12 auf. Auf der anderen Wandungsseite wird die obere Werkzeughälfte 11, in die oberhalb des Bereiches des Durchbruches 18 eine ein Kunststoff-Kleinteil 14 formende Spritzgußform 15 und ein Einspritzkanal 13 für der flüssigen Kunststoff eingearbeitet ist, gleichfalls dichtend aufgelegt. Der Kunststoff wird anschließend durch den Einspritzkanal 13 unter Druck eingebracht, wobei er das Kunststoff-Kleinteil 14 formend die Spritzgußform 15 vollständig füllt, die Dunnstelle aufbricht und unter vollständiger Füllung des freien Volumens des Durchbruches 18 mit seiner Hinterschneidung 19 den Deckel 20 in Richtung der unteren Werkzeughälfte 12 in die Hinterschneidung 19 abdrängt. Ist der Kunststoff ausgehärtet, wird das Spritzgußwerkzeug gelöst.

Das hierbei gebildete Kunststoff-Kleinteil 14, in diesem Fall ein Befestigungselement, ist in Figur 4 dargestellt. Mit dem Befestigungselement kann das Formpreßteil 10′ an ein anderes Bauteil anliegend befestigt werden. Die Seite der Hinterschneidung 19 ist bündig zu der Wandung des Formpreßteiles 10 mit dem Kunststoff gefüllt, wobei der abgedrängte Deckel 20 in diesem Bereich Einfallstellen des Kunststoffes, die beim Aushärten des Kunststoffes entstehen, vermeidet und zusätzlich Kunststoff einspart.

Ein weiteres Kunststoff-Kleinteil 14′ ist in Figur 6 und der dazugehörige Spritzgußvorgang in Figur 5 dargestellt. Die Unterschiede zum vorangegangenen Beispiel bestehen hierbei darin, daß das Kunststoff-Kleinteil 14′ an den Wandungen des Formteiles 10˝ eine obere Überdeckung 16 und eine untere Überdeckung 17, deren jeweilige Fläche größer als der Querschnitt des zugehörigen Durchbruches 18′ ist, aufweist. Die Spritzgußformen 15′, 15˝ für das Kunststoff-Kleinteil 14, sind hierbei in die untere Werkzeughälfte 12, (Spritzgußform 15˝) und in die obere Werkzeughälfte 11, (Spritzgußform 15,) eingearbeitet. Der Spritzgußvorgang des vorangegangenen Beispieles ist prinzipiell übertragbar, nur daß hier der Deckel 20′, der, um die Verdrängungsarbeit des durch den Einspritzkanal 13′ einströmenden Kunststoffes zu verringern, an der unteren Wandung des Formpreßteiles 10′ angebracht ist, in die untere Überdeckung 17, die durch die Spritzgußform 15˝ geformt wird, abgedrängt wird.

Um Dünnstellen und/oder damit verbundene Deckel, bei denen der zum Durchdrücken benötigte Druck sehr hoch ist, zu offnen, ist es sinnvoll, über dem Ort des beabsichtigten Durchbruches einen Stössel anzuordnen, der axial beweglich in der oberen Werkzeughälfte angeordnet ist. Beim Beginn des Spritzvorganges stößt man dann den Deckel bzw. die Dunnstelle aus, zieht den Stössel derart zurück, daß im ausgeharteten Kunststoff-Kleinteil nur vernachläßigbare bzw. gar keine Spuren zu sehen sind, und spritzt die Spritzgußformen sowie den Durchbruch vollständig aus.

## Patentansprüche

1. Verfahren zum örtlich definierten, festhaftenden Anbringen von Kunststoff-Kleinteilen (14,14') an im wesentlichen aus verklebten oder kunstharzgebundenen Naturfasern oder Spänen bestehenden Formpreßteilen, (10,10',10'') die aus einer in ein Formpreßwerkzeug eingebrachten, vorgeformten, lockeren Lage aus Naturfaser- und/oder Späne-Binder-Gemisch in dem Formpreßwerkzeug unter Abbinde-Reaktion des Binders und Volumenreduktion der Lage in die gewunschte Form gepreßt werden,
**gekennzeichnet durch**
ein unmittelbares formschlüssiges Anspritzen des/der Kunststoff-Kleinteile(s) (14, 14′) an die Wandung des Formpreßteiles (10, 10′, 10˝) an der Befestigungsstelle unter der Anwendung bzw. Ausgestaltung folgender Verfahrensschritte:
a) an der Befestigungsstelle des Kunststoff-Kleinteiles (14, 14′) am Formpreßteil (10, 10′, 10˝) wird während des Formpreßvorganges wenigstens ein kleiner als das Kunstoffkleinteil (14, 14,) ausgebildete(r) Durchbruch (18, 18′) bzw. eine Dünnstelle in die Wandung des Formpreßteiles (10, 10′, 10˝) eingeformt;
b) das fertige Formpreßteil (10, 10′, 10˝) wird lagedefiniert mit der Befestigungsstelle in ein geteiltes Spritzgußwerkzeug zum Anformen des Kunststoff-Kleinteiles (14, 14′) eingelegt, wobei dies- und jenseits der Wandung des Formpreßteiles (10, 10′, 10˝) je eine Werkzeughälfte des Spritzgußwerkzeuges dichtend zur Anlage kommt;
c) der Kunststoff zur Bildung des Kunststoff-Kleinteiles (14, 14′) wird einseitig von einer Werkzeughälfte her in das Spritzgußwerkzeug eingespritzt und füllt - innerhalb des Spritzgußwerkzeuges - den Durchbruch (18, 18′) des Formpreßteiles (10, 10′, 10˝) vollständig aus, wobei der Kunststofff zu der der Einspritzseite gegenüberliegenden Werkzeughälfte durch den Durchbruch (18, 18′) bzw. die unter dem Druck des eingespritzten Kunststoffes aufbrechende Dünnstelle hindurchgelangt.

2. Verfahren nach Anspruch 1,
**dadurch gekennzeichnet,**
daß aufgrund der im Querschnitt kerbartig ausgebildeten und einem geschlossenen Linienzug folgenden Dünnstelle ein zumindest den späteren Durchbruch (18, 18′) ausfüllender Deckel (20, 20′) beim Anspritzen des/der Kunststoff-Kleinteile(s) (14, 14′) aus der Wandung des Formpreßteiles (10, 10′, 10˝) herausgebrochen, in die der Einspritzseite gegenüberliegende Werkzeughälfte verschoben und zumindest teilweise ebenfalls mit Kunststoff umspritzt wird.

3. Verfahren nach Anspruch 1,
**dadurch gekennzeichnet,**
daß der das Kunststoff-Kleinteil (14, 14′) bildende Kunststoff von der einer Hinterschneidung (19) des Durchbruches (18, 18′) gegenüberliegenden Wandungsseite des Formpreßteiles (10, 10′, 10˝) eingespritzt und der Deckel (20, 20′) auf die Seite der Hinterschneidung (19) abgedrängt wird.

## Claims

1. Method of attaching small plastic parts (14, 14') securely in a defined position on compression moulded parts (10, 10', 10'') consisting substantially of bonded or synthetic resin bound natural fibres or chips, which parts are compression moulded into the desired shape in a compression mould from a preformed, loose layer of a mixture of natural fibres and/or chips and binder introduced into the said compression mould, while undergoing a setting reaction of the binder and a volume reduction of the layer, characterized by a direct, form-fitting injection moulding of the small plastic part(s) (14, 14') onto the wall of the compression moulded part (10, 10', 10'') at the fastening point, applying or interpreting the following method steps:
a) during the compression moulding operation, at least one clearance (18, 18') or a thin portion, smaller than the small plastic part (14, 14'), is formed in the wall of the compression moulded part (10, 10', 10'') at the fastening point of the small plastic part (14, 14') on the compression moulded part (10, 10', 10'');
b) the finished compression moulded part (10, 10', 10'') is placed in a defined position with the fastening point in a split injection mould for moulding on the small plastic part (14, 14'), one mould half of the injection mould each coming snugly into contact on the near side and the far side of the wall of the compression moulded part (10, 10', 10'');
c) the plastic for forming the small plastic part (14, 14') is injected from one side of a mould half into the injection mould and - within the injection mould - completely fills the clearance (18, 18') of the compression moulded part (10, 10', 10''), the plastic reaching the mould half opposite the injection side through the clearance (18, 18') or the thin portion breaking open under the pressure of the plastic injected in.

2. Method according to Claim 1, characterized in that, due to the thin portion which is of a notch-like design in cross-section and follows a continuous line, a cover (20, 20') filling at least the later clearance (18, 18') is broken out from the wall of the compression moulded part (10, 10', 10'') during injection-moulding on of the small plastic part(s) (14, 14'), is pushed into the mould half opposite the injection side and likewise surrounded, at least partially, with injected plastic.

3. Method according to Claim 1, characterized in that the plastic forming the small plastic part (14, 14') is injected in from the wall side of the compression moulded part (10, 10', 10'') opposite an undercut (19) of the clearance (18, 18') and the cover (20, 20') is forced away towards the side of the undercut (19).

## Revendications

1. Procédé pour mettre en place de petites pièces en matière plastique (14, 14') de façon localement définie et de manière qu'elles adhèrent solidement sur des pièces moulées par compression (10, 10', 10'') constituées essentiellement de fibres naturelles ou de copeaux collés ensemble ou liés par une résine synthétique, lesquelles sont amenées à la forme désirée par compression d'une couche formée d'un mélange de fibres naturelles et/ou de copeaux et d'un liant, couche qui est préformée et mise en place à l'état meuble ou peu compact dans un outillage de moulage par compression, la compression s'accompagnant d'une réaction de prise du liant et d'une réduction du volume de la couche,
caractérise par
un moulage direct, à complémentarité de formes, de la ou des petites pièces en matière plastique (14, 14') à la paroi de la pièce moulée par compression (10, 10', 10''), au point de fixation prévu, avec application ou mise en oeuvre des étapes de procédé suivantes:
a) au point de fixation de la petite pièce en matière plastique (14, 14') sur la pièce moulée par compression (10, 10', 10''), on forme, pendant l'opération de moulage par compression, au moins une cavité (18, 18') plus petite que la petite pièce en matière plastique (14, 14'), ainsi qu'une zone mince dans la paroi de la pièce moulée par compression (10, 10', 10'');
b) on place la pièce moulée finie (10, 10', 10'') de façon localement définie, par son point de fixation, dans un moule divisé pour le moulage par injection de la petite pièce de matière plastique (14, 14'), avec application étanche d'un demi-moule de ce moule d'injection respectivement contre l'une et l'autre des parois opposées de la pièce moulée par compression (10, 10', 10''); et
c) on injecte la matière plastique pour la formation de la petite pièce en matière plastique (14, 14') d'un côté dans le moule d'injection, à partir d'un demi-moule, de manière que la matière plastique remplisse complètement - à l'intérieur du moule d'injection - la cavité (18, 18') de la pièce moulée par compression (10, 10', 10''), la matière plastique pénétrant dans le demi-moule opposé, par rapport au côté à partir duquel s'effectue l'injection, en passant à travers la cavité (18, 18') et à travers la zone mince, laquelle est rompue sous la pression de la matière plastique injectée.

2. Procédé selon la revendication 1, caractérisé en ce que la zone mince, réalisée à la façon d'une entaille en section droite et s'étendant suivant une ligne fermée en elle-même, délimite un couvercle (20, 20') qui obture au moins la cavité ultérieure (18, 18') et est détaché, lors du moulage par injection de la ou des petites pièces en matière plastique (14, 14'), de la paroi de la pièce moulée par compression (10, 10', 10''), refoulé dans le demi-moule situé à l'opposé du côté à partir duquel s'effectue l'injection et est également enrobé en partie au moins de matière plastique.

3. Procédé selon la revendication 1, caractérisé en ce que la matière plastique formant la petite pièce (14, 14') est injectée à partir d'un côté de la pièce moulée par compression (10, 10', 10'') situé à l'opposé d'une partie rentrante (19) formée dans la cavité (18, 18'), et le couvercle (20, 20') est refoulé jusque sur le côté où se trouve la partie rentrante (19).
